# EUROPEAN PATENT APPLICATION

(11) **EP 2 043 286 A1**
(43) Date of publication of application: **01.04.2009**
(21) Application number: 07018972.5
(22) Date of filing: 26.09.2007
(51) Int. Cl.: H04J 3/16

(54) **Method to equalize delays in an optical network**

(71) Applicant: Nokia Siemens Networks Oy, 02610 Espoo (FI)
(72) Inventor: Gasiorowski, Edmund, 71-045 Szczecin (PL)
(74) Representative: Bruglachner, Thomas E.

(57) **Abstract**

The invention is related to a method to equalize message delays in a passive optical network between an optical line terminator and optical network units, connected at different distances to the optical line terminal, where a predefined delay for messages from the optical network unit (ONU) in response to messages from the optical line terminator (OLT) is changed in a particular optical network unit by a message in an initialization process for new connected optical network units (ONU).

## Description

The invention is related to a method to equalize message delays in a passive optical network between an optical line terminator and optical network units, connected at different distances to the optical line terminal.

Passive optical networks are low cost access networks that provide means to deliver telecommunication signals from a central office via an Optical Line Terminal OLT to subscribers near Optical Network Units ONU. The direction from the central office to the subscribers is called downstream while the reverse direction is called upstream.

Since multiple ONUs are connected to a single OLT through a complete passive optical infrastructure, the downstream communication is of the point-to multipoint type, which means that all ONUs connected to the OLT receive the same signal emitted by the OLT. Upstream communication is of the point to point type, as all signals from the ONUs are merely combined together in splitters. This requires channel sharing, which is usually done by a time division multiplexing mechanism.

There is a signal delay in the network, due to the distance between the ONU and the OLT. Messages from ONUs at a long distance arrive later at the OLT than messages from short connected ONU.

The OLT has a time window for searching for messages from newly connected ONUs. This window is arranged for ONUs at a long distance. So short connected ONUs can respond too early to messages from the OLT and the OLT will not find these responses.

Currently this problem is solved by widening the time window for searching for new ONUs. Since all operational ONUs stop their messages in upstream direction during the search process, the quality of service of the network degrades.

Another way of solving the problem is to adopt the link parameters which tell the OLT when to expect responses from the ONUs. These parameters have to be configured, taking into account the different distances of the ONUs. To change the link parameters in the OLT, the network has to be deactivated. This stops all active ONUs and therefore also degrades the quality of service.

It is the objective of this invention to allow the connection of new ONUs to an active optical network without degradation of the quality of service.

This objective is achieved by the method of claim 1.

Embodiments of the invention are shown in the dependent claims.

In a passive optical network ONUs are connected at different distances to the OLT. A predefined delay for messages from the ONU in response to messages from the OLT is provided to compensate and virtually shorten the length of the network link. An initialization process is arranged to allow the connection of new ONUs to an active optical network. The delay in a particular new connected ONU is changed by a message in an initialization process.

A newly connected ONU is in a state of initialization. It awaits a broadcast message from the OLT to become synchronized onto the network. This broadcast message contains a particular delay value which changes ONUs predefined delay value.

The response of the ONU is transmitted in upstream direction with a delay, corresponding to the received particular delay (predefined delay) value. The response also contains an identifier, e.g. its serial number.

The OLT searches for a valid response of the ONU which contains an identifier. If the predefined delay value was enough then the OLT will see ONU responses.

The OLT sends a message to the particular ONU, which now can be addressed directly by the identifier, with the valid delay value. With this process, the ONU becomes synchronized with the network and will be set into a ranging or operational state.

The OLT repeats this initialization process with different particular delay values if no responses were found by the OLT in certain time. Only ONUs in a state of initialization will respond to broadcast messages of the initialization process, ONUs in the operational state will not respond.

In a preferred embodiment of the invention the ONU is set into the Ranging state. In this state a Round Trip Measurement RTD process is started. In this process the ONU responses with messages which additionally contain the total delay value.

The RTD procedure calculates equalization delay, which compensate the length of the fibre, taking into account following things: first ranging counters, supported by the HW (FPGA), which start at the beginning of ranging and stops when first ranging response arrives at the OLT and total delay value which contains pre-equalization delay previously set, when upstream overhead message arrived at the ONU side.

At the time of ranging, the total delay value included in the ranging response has only predefined delay. The total delay is reported to OLT by the ONU in a response message during RANGING state.

The delay values are preferably specified in bit times of the messages in the network, but can be easily set to HW (FPGA) clock cycles or other scalable units to transport bigger values of delay within messages.

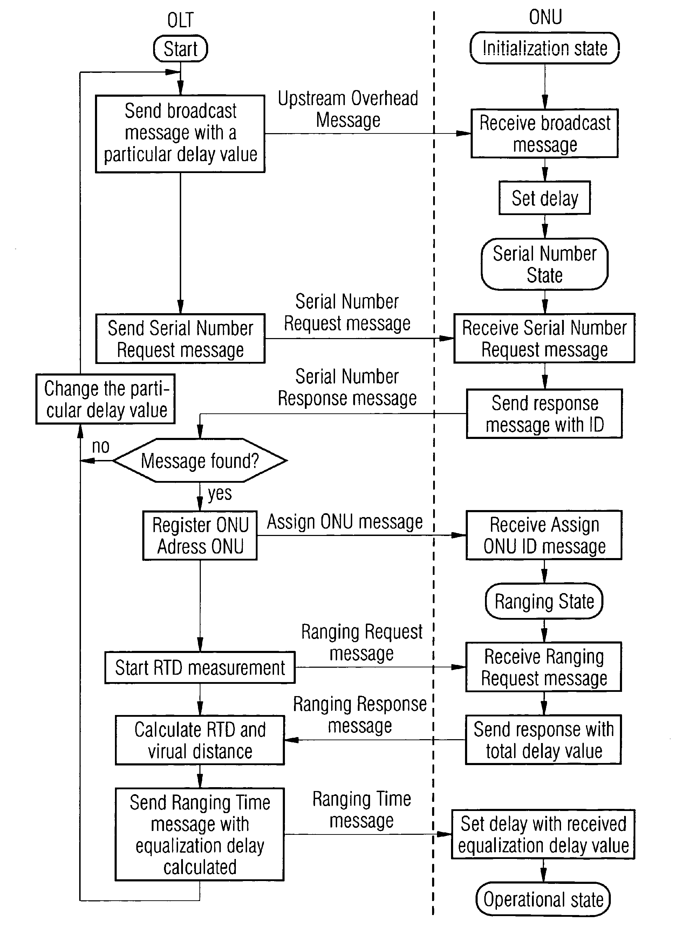

The figure shows a diagram of the typical equalization process with a roundtrip delay measurement.

The OLT sends/broadcasts out an "Upstream Overhead" message with a particular delay (predefined delay) value. This message is received by all ONUs but only analyzed by an ONU in an initialization state. This ONU sets the delay for following up messages to the OLT. The OLT sends out a serial number request massage. This is received by the ONU in the Initialization state. It send out the Serial Number Response message with its identifier ID. The OLT waits for responses. If it does not receive a response correctly in an adequate time, it changes the particular delay value and sends out the next broadcast message.

If it does receive a correct response, it identifies the responding ONU by the sent identifier ID, registers this ONU and addresses the ONU with a "Assign ONU Id" message. By this the ONU is set into the RANGING state and the round trip delay measurement is started.

A Ranging Request message is sent to the ONU which responds with a Ranging Response message containing its current total delay value. The OLT calculates equalization delay for this ONU in its RANGING state.

When Round Trip Delay measurement is successfully finished then the OLT sends a ranging time message with the calculated equalization delay and sets the ONU to the OPERATIONAL state.

The OLT repeats the process of synchronizing new ONU by changing the particular delay (predefined delay) value for the broadcast message and sends it out again.

Setting of the equalization delay value finally sent to every ONU can be also set on demand manually by the OLT operator.

## Claims

1. A method to equalize message delays in a passive optical network between an optical line terminator and optical network units, connected at different distances to the optical line terminal, **characterized in that** a predefined delay for messages from the optical network unit (ONU) in response to messages from the optical line terminator (OLT) is changed in a particular optical network unit by a message in an initialization process for new connected optical network units (ONU).

2. A method according to claim 1, **characterized in that** the initialization process comprises:
- a broadcast message from the optical network terminator (OLT), containing a particular delay (predefined delay) value,
- a response with an identifier (ID) from a newly connected optical network unit (ONU) after a delay corresponding to the particular delay value in the broadcast message,
- searching of a valid response message with an identifier (ID) by the optical line terminal (OLT),
- setting the equalization delay in the optical network unit (ONU) with the received identifier (ID),
- repeating the process with a broadcast message containing a different particular delay (predefined delay) value.

3. A method according to claim 2, **characterized in that** the newly connected optical network unit (ONU) is in a state of initialization and after the setting of the particular delay value, the optical network unit (ONU) is set into a state of Ranging.

4. A method according to claim 3, **characterized in that** the initialization process further comprises:
- starting a Round Trip Measurement procedure,
- reporting back from the optical network unit (ONU) to the optical line terminal (OLT) with messages containing a total delay value which corresponds to the pre-equalization delay set previously in a state of initialization,

5. A method according to claim 2, **characterized in that** only optical network units (ONU) in a state of initialization are responding to the broadcast messages.

6. A method according to claim 1, **characterized in that** the total delay of the messages from the optical network unit (ONU) to the optical line terminal (OLT) is the sum of the predefined delay and the transmitted particular delay value.

7. A method according to claim 6, **characterized in that** the distance between the optical network unit (ONU) and the optical line terminal (OLT) is calculated during the RANGING state and Round Trip Delay measurement procedure.

8. A method according to claim 1, **characterized in that** the predefined delay corresponds to a long distance.

9. A method according to claim 2, **characterized in that** the delay values are specified in bit times of the messages.
